(19) Europäisches Patentamt
European Patent Office
Office européen des brevets

(11) Publication number: **0 469 260 A1**

(12) **EUROPEAN PATENT APPLICATION**

(21) Application number: **91108399.6**

(51) Int. Cl.$^5$: **F28D 15/02**, C01B 5/00

(22) Date of filing: **24.05.91**

(30) Priority: **30.07.90 US 559776**

(43) Date of publication of application: **05.02.92 Bulletin 92/06**

(84) Designated Contracting States: **DE**

(71) Applicant: **ABB AIR PREHEATER, INC.**
**Andover Road**
**Wellsville, NY 14895(US)**

(72) Inventor: **Counterman, Wayne Stanley**
**RD No.2, Lewis Road**
**Wellsville, New York 14895(US)**

(74) Representative: **Gross, Gernot K.**
**Kleiberweg 5**
**W-6200 Wiesbaden(DE)**

(54) **Heat pipe heat exchanger and heat pipe therefor.**

(57) A heat pipe heat exchanger (2) and a heat pipe (10) therefor wherein the condensor end (30) of the heat pipe (10) is provided with a hydrogen gas collection chamber (80) which houses a hydrogen gas oxidization material (85) and/or has a wall portion formed at least in part of a material (82) through which hydrogen gas diffuses thereby improving the removal of hydrogen gas generated within the heat pipe (10) from the working cavity (50) thereof.

The heat exchanger (2) includes a casing (4) defining a first gas duct (6) for a stream of heated gas and a second gas duct (8) for a stream of gas to be heated. The heat pipes (10) are disposed within the heat exchanger (2) with their evaporator portion (20) in the first gas duct (6) and their condenser portion (30) in the second gas duct (8). An auxiliary plenum chamber (40) is provided laterally adjacent the second gas duct (8) to receive the hydrogen gas collection chamber (80) of each heat pipe. The hydrogen gas collection chambers (80) are selectively heated either by a heating coil (90) wrapped about the hydrogen gas collection chamber (80) of each heat pipe, or by heating the interior of the auxiliary plenum chamber (40).

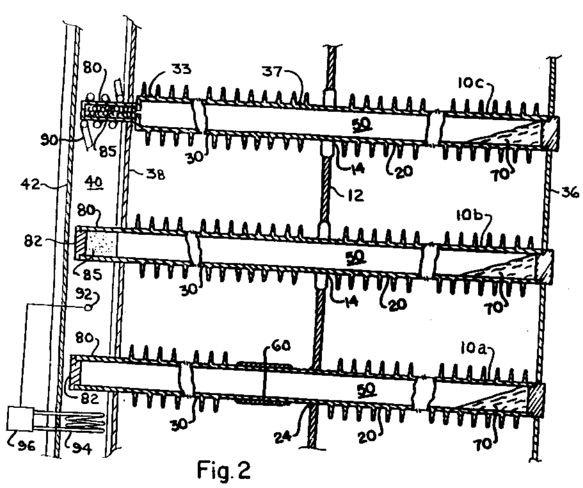


Fig. 2



Rank Xerox (UK) Business Services

BACKGROUND OF THE INVENTION

The present invention relates generally to heat exchangers for transferring heat from a gaseous heating fluid to a gaseous fluid to be heated and, more particularly, to such a gas to gas heat exchanger incorporating therein heat pipes, each heat pipe defining a working chamber having an evaporator section disposed in the flow path of the gaseous heating fluid and a condenser section disposed in the flow path of the gaseous fluid to be heated, and housing a working fluid which continuously undergoes a phase change as it circulates between the evaporator and condenser sections of the working chamber.

Heat exchangers incorporating numerous independently operating heat pipes to transfer heat from a hot gas stream to a cool gas stream have found wide application in industry. For example, in U. S. Patent No. 2,813,698, heat pipes are used in a heat exchanger to preheat combustion air by transferring heat from the hot stack gas discharged from a furnace to combustion air being supplied to the furnace. Further, U. S. Patent Nos. 4,616,697 and 4,687,649 disclose using heat pipe heat exchangers to reheat stack gas discharged from a wet scrubber by transferring heat from the hot stack gas upstream of the scrubber to the cool stack gas downstream of the scrubber.

In such heat exchangers, each heat pipe operates independently and consists of an elongated, closed tube which has been evacuated, filled with a heat transfer fluid, and hermetically sealed. Although many different heat transfer fluids have been successfully used as the working fluid in heat pipes, water is often used as the working fluid in industrial applications such as air preheating and flue gas reheating due to its low cost, ease of handling, safety and suitable heat transfer characteristics in the applicable range of operating temperatures for such application. In operation, the evaporator section of the heat pipe is disposed in the hot gas stream such that thermal energy is transferred from the hot gases to vaporize working fluid in the evaporator section. The vapor travels to the condenser section which is disposed in the stream of gas to be heated wherein the cool gas flowing over the heat pipe removes heat from the vapor causing the vapor to condense into liquid which flows back to the evaporator section of the heat pipe where it will be vaporized again by the hot flue gases. The closed loop evaporation-condensation cycle is continuous as long as there is a temperature difference between the combustion air or scrubber discharge gas to be heated and the flue gas serving as the heating fluid.

When used in heat exchangers for air preheating, flue gas reheating, and many other industrial gas to gas heat transfer applications, heat pipes are exposed to gas temperatures ranging from a low of about ambient temperature for the gas to be heated, to a typical high of about 400 °C to 450 °C for the heating gas, while the operating temperature of the heat pipes per se typically ranges from about 70 °C to about 425 °C depending upon the location of the heat pipe within the heat exchanger with respect to the incoming flow of heating gas. When using heat pipes to preheat combustion air or reheat flue gas via heat transfer from hot flue gas, condensation of corrosive gases in the flue gas occurs when the flue gas temperature drops below the adiabatic saturation temperature of the flue gas. In combustion air preheat applications, condensation of corrosive gases usually occurs on the exterior surface of the evaporator portion of the heat pipes disposed in the flue gas flow at the cold end of the heat exchanger. However, as no corrosive gases are present in the combustion air being preheated, the condenser portions of these same heat pipes will not be exposed to corrosion. In flue gas reheat applications, the condensation of corrosive gases is usually experienced on the exterior surface of the condenser portion of the heat pipes disposed in the cold end of the heat exchanger in the flow of cool moisture-saturated flue gas discharged from the flue gas scrubber. However, as the hot flue gas serving as the heating gas in such flue gas reheat applications typically exits the heat exchanger at a temperature well above the saturation point, the evaporator portions of these same heat pipes will not be exposed to corrosion.

Although heat pipe enclosures have been made of many different metal alloys, it is customary practice to make heat pipes used in gas-to-gas heat exchange, such as air preheating and gas reheating, of ferrous metals and ferrous metal alloys. Heat pipes which are to be used in sections of gas-to-gas heat exchangers wherein condensation of corrosive gases is not generally expected or at least infrequent are typically made of low corrosion resistant ferrous alloys, for example carbon steels. However, heat pipes which are to be used in sections of gas-to-gas heat exchangers wherein condensation is expected are typically made of high corrosion resistant ferrous alloys, for example stainless steels. It is also known to make composite heat pipes for use in gas-to-gas heat exchangers by forming that portion of the heat pipe which is to be exposed to corrosive gases out of a high corrosion resistant steel while forming that portion of the heat pipe which is not to be exposed to corrosive gas out of a less expensive low corrosion resistant steel.

In any case, it is well known that when heat pipes formed of ferrous metals or ferrous metal alloys and using water as a working fluid are placed in operation, a series of reactions will generally occur between the water working fluid and the steel wall of the heat pipe cavity at the temperatures at which the heat pipes are

generally utilized. It is generally considered that the principal reactions are:

$$Fe + 2H_2O \xrightarrow[120°C]{heated} Fe(OH)_2 + H_2$$

$$3Fe(OH)_2 \longrightarrow Fe_3O_4 \ . \ x\ H_2O + H_2 \quad + H_2O$$

As a result of these reactions, non-condensible hydrogen gas is generated which gradually accumulates within the working cavity of the heat pipe in the condenser end thereof. As this hydrogen gas accumulates in the condenser portion of the heat pipe, and also acts as an insulator and retards the heat transfer from the vapor phase of the working fluid thereby interfering with the condensation phase change and consequently seriously decreasing the heat exchange effectiveness of the heat pipe. In wicked heat pipes, it is believed that the hydrogen gas may even accumulate in the wick in the condenser portion of the working cavity to the extent that an annular layer of hydrogen gas is formed about the wall of the condenser portion of the working cavity thereby effectively preventing condensation of the vapor phase of the working fluid.

Several solutions have been proposed to address the problem of hydrogen gas accumulation in such heat pipes. One method is to improve the chemical compatibility of the heat pipe enclosure with the working fluid. In steel heat pipes using water as the working fluid, U. S. Patent 4,760,878, discloses inhibiting hydrogen gas generation via the reaction between water and iron by treating the inner surface of the heat pipe with an aqueous solution of a vanadate with heating so that a protective layer is formed thereon of at least one chemically stable oxide such as vanadium dioxide, vanadium trioxide, ferric oxide, and ferric-ferrous oxide. Complete integrity of such a protective chemical layer over the entire inner cavity cannot be guaranteed over long periods of operation.

With water as the working fluid, it is also known to provide a protective lining on the inner surface of the steel heat pipe enclosure to effectively line the heat pipe cavity to prevent contact between the water and the steel enclosure. The protective lining must be made of a material which will not react with the water. Typically, copper is selected as the protective lining since it is known not to react with water at the working temperature typically encountered in industrial uses. One such heat pipe, known as a duplex-tube heat pipe, is formed of an inner copper tube force fit within an outer stainless steel pipe. Such duplex-tube heat pipes have been employed in industrial heat exchangers such as gas-to-gas heat exchangers used to preheat combustion on fossil-fuel steam generators. However, such duplex-tube heat pipes are difficult and expensive to manufacture. Also, complete integrity of the copper lining cannot be ensured over long periods of operation and eventual contact between steel and water cannot be completely precluded. Therefore, even in such copper-lined heat pipes, hydrogen gas is likely to be formed and accumulate slowly over time when water is used as the working fluid, thereby limiting the effective service life of the heat pipe.

Rather than selecting a metal for use in forming the enclosure of the heat pipe cavity which is compatible with the working fluid, it has also been suggested to select a working fluid which is chemically compatible with the steel heat pipe enclosure. For example, it has been proposed that ammonia be utilized as the working fluid in steel heat pipes as ammonia does not appear to react with the steel enclosure to form non-condensible hydrogen gas. Although theoretically the use of ammonia as a working fluid should solve the problem, in practice small amounts of water are invariably contained in the ammonia which will react with the steel pipe to form the undesirable non-condensible hydrogen gas as discussed in U. S. Patent No. 4,586,561. Other common working fluids used in heat pipes are generally hydrocarbon based. As these hydrocarbon fluids break down or deteriorate over a period of time, hydrogen gas may also be released either directly from break down of the hydrocarbon fluid or reaction of the breakdown products with the steel enclosure. Additionally, water may also be present in small amounts as a contaminant in hydrocarbon based working fluids.

An alternative approach to addressing the accumulation of hydrogen gas in steel-water heat pipes is to provide a means of alleviating the accumulation of the hydrogen gas within the heat pipe cavity, rather than attempting to prevent its formation. One such approach is to release the accumulated hydrogen gas from the heat pipe cavity by some form of vent means. For example, a valve assembled on the end of the condensation section of the heat pipe can be used to release accumulated hydrogen gas periodically when heat pipe is in operation. But this way has obvious disadvantages, e.g., the operation of the valves is troublesome and inconvenient, and secondly, unavoidable leakage of the valves shorten the service life of the heat pipe. Another example, as disclosed in U. S. Patent No. 3,503,483, is a palladium vent tube sealed to the wall of heat pipe and having a closed inner end and an open outer end to allow the hydrogen gas to

continually permeate through the palladium out of the heat pipe. But palladium is a rare and precious metal, and for both reasons of cost and availability cannot be widely used in industrial applications.

Another approach is remove the hydrogen gas from the heat pipe cavity by adsorption. To do so, it is known to place a hydrogen getter material within the heat pipe cavity within the condenser portion of the heat pipe. A getter material is a substance which binds a gas on its surface. Hydrogen getters proposed for use in heat pipes include tantalum, titanium, and niobium as disclosed in U. S. Patent No. 4,043,387; lanthanum, yttrium or scandium, combined with barium, calcium or lithium as disclosed in U. S. Patent No. 4,159,737; or a zirconium intermetallic alloy, such as $ZrMn_2$ alloy, as disclosed in U. S. Patent No. 4,586,561. However, in addition to being very costly for use in heat pipes for industrial application, such hydrogen getters typically are capable of adsorbing less hydrogen gas as temperature increases. Thus, such hydrogen getters are effective in heat pipes only under conditions of relatively low working temperature such as experienced when used for permafrost stabilization as discussed in the aforementioned U. S. Patent No. 4,586,561, but would be much less effective in heat pipes used in industrial applications such as gas-to-gas heat exchange, wherein the condenser portion of the heat pipe would commonly be exposed to gas temperatures of at least 250° C.

A further approach to eliminate hydrogen gas from the working cavity after its formation on ferrous metal/water heat pipes is to provide a solid hydrogen oxidizing material within the heat pipe enclosure capable of oxidizing any hydrogen gas coming in contact therewith to water, that is converting the hydrogen gas back into the working fluid from whence it was generated. For example, U. S. Patent No. 4,782,890 discloses placing copper oxide, in granular, powdery or porous block form in the condenser portion of the heat pipe enclosure as a hydrogen gas oxidizing agent. U. S. Patent No. 4,884,628 further discloses placing an oxidizing agent comprising a mixture of copper and copper oxide, and preferably chromium oxide, within the condenser portion of the heat pipe as a means for oxidizing the hydrogen gas back to water. Although such oxidizing agents function well at certain temperatures, the hydrogen conversion efficiency of such oxidizing agents is quite temperature dependent, and the heat pipes are often exposed in operation to gas temperature which result in the heat pipe enclosure being at an operating temperature well below the peak performance temperature of the oxidizing material.

Accordingly, it is an object of the present invention to provide a heat pipe heat exchanger and a heat pipe therefor incorporating means for heating a hydrogen gas diffusion means and/or a hydrogen gas oxidizing agent operatively associated with the heat pipe to a temperature range sufficient to ensure increased hydrogen gas diffusion and/or oxidization.

## SUMMARY OF THE INVENTION

The present invention provides a heat pipe heat exchanger and a heat pipe therefor characterized by heating means operatively associated therewith for increasing the temperature of a hydrogen gas diffusion means and/or a hydrogen gas oxidization means for improving the removal of hydrogen gas generated within the heat pipe from the working cavity of the heat pipe.

The heat exchanger of the present invention includes a casing defining within its interior a gas flow path therethrough and having a seal plate disposed within its interior so as to divide the gas flow path therethrough into a first gas duct on one side of the seal plate defining a first flow passageway for a first gas stream of heated gas and a second gas duct on the other side of the seal plate defining a second flow passageway for a second gas stream of gas to be heated. At least one heat pipe, but most typically a plurality of heat pipes, are mounted to the seal plate so as to extend therethrough with the evaporator portion of each heat pipe being disposed in the first gas duct and the condenser portion of each heat pipe being disposed in the second gas duct. An auxiliary plenum chamber is provided laterally adjacent the second gas duct so as to receive the end portions of the condenser portions of the heat pipes.

Each heat pipe of the present invention is provided with a hydrogen gas collection chamber operatively associated in flow communication with the condenser portion of the heat pipe disposed within the auxiliary plenum chamber for receiving hydrogen gas generated within the working cavity of the heat pipe. The hydrogen gas collection chamber may either house a hydrogen gas conversion material capable of chemically converting hydrogen gas to water, or have at least a portion of its enclosure wall made of a material through which hydrogen gas diffuses at a temperature dependent rate with the rate of diffusion therethrough increasing as the temperature of the diffusion material increases. Most advantageously, the heat pipe of the present invention is provided with a hydrogen gas collection chamber which both houses a hydrogen gas conversion material and has at least a portion of its enclosure wall form of hydrogen diffusion material.

In accordance with the present invention, heating means is provided for selectively heating the

hydrogen gas collection chambers associated with the ends of the condenser portion of any heat pipes extending into the auxiliary plenum chamber so as to raise the temperature of each hydrogen gas collection chamber to a temperature substantially above the temperature of the condenser portion of the heat pipe. The heating means may comprise a heating coil operatively associated directly with the hydrogen gas collection chamber of each heat pipe, or the heating means may be operatively associated with the auxiliary plenum chamber for heating the interior of the auxiliary plenum chamber thereby raising the temperature of each hydrogen gas collection chamber and any hydrogen conversion material housed therein. Most advantageously, the heating means is selectively operatible to heat the hydrogen gas collection chamber to a temperature of at least 150 °C, and preferably to a temperature ranging from 160 °C to about 200 °C.

## BRIEF DESCRIPTION OF THE DRAWING

Figure 1 is a side elevational view, partly in section, of the gas-to-gas heat exchanger of the present invention; and

Figure 2 is an enlarged cross-sectional view of the portion of the heat exchanger of Figure 1 delimited by line 2-2 thereon and illustrating various embodiments of the heat pipe of the present invention.

## DESCRIPTION OF THE PREFERRED EMBODIMENT

Referring now to the drawing, and more particularly to Figure 1 thereof, there is depicted therein a gas-to-gas heat exchanger 2 comprising a casing 4 defining within its interior a first gas duct 6 providing a generally vertical flow passageway for a stream of gaseous heating fluid to pass therethrough and a second gas duct 8 providing a generally vertical flow passageway for a stream of gaseous fluid to be heated to pass therethrough, and a plurality of heat pipes 10 disposed within the casing 4 and supported in and extending through a seal plate 12 mounted within the casing 4 so as to divide the casing 4 into the first gas duct 6 on one side of the seal plate 12 and the second gas duct 8 on the other side of the seal plate 12. The first gas duct 6 has an inlet 16 at one end thereof, typically the upper end, for receiving the incoming stream of hot gaseous heating fluid, for example furnace flue gases, a gas outlet 26 at the opposite end thereof, typically the lower end, for discharging the cooled stream of gaseous heating fluid. The second gas duct 8 has an inlet 18 at one end thereof, typically the lower end, for receiving the incoming stream of cool gaseous fluid to be heated, for example ambient air, and a gas outlet 28 at the opposite end thereof, typically the upper end, for discharging the heated stream of gaseous fluid.

The seal plate 12 serves not only as a partition plate to separate the flow passageways for the heating gas and the gas to be heated from each other to preclude intermixing of the fluids, but also as a tube sheet for supporting the heat pipes 10. Each heat pipe 10 is mounted in a hole in the seal plate 12 so as to penetrate the seal plate 12 and extend therethrough into the first gas duct 6 on one side of the seal plate 12 and into the second gas duct 8 on the other side of the seal plate 12. The heat pipes 10 are tightly fitted into the seal plate 12, preferably with a sealing ring 14 disposed between each heat pipe 10 and the surrounding edge of the hole into which it is fitted as illustrated on the upper two heat pipes in Figure 2, or with a circumferential seal weld 24 as illustrated on the lower heat pipe in Figure 2, so as to provide a gas tight fit to preclude leakage of gas from one gas duct to the other. Alternatively, more elaborate thermal sleeve type support members, such as shown in U. S. Patent Nos. 4,485,865 and 4,674,567, or German Offenlegungsschrift 2920577, may be employed to mount the heat pipes 10 into the seal plate 12. In any case, the outer ends of the heat pipes 10 may be supported in support plates 36 and 38 disposed at opposite sides within the heat exchanger casing 4 to provide additional support for the heat pipes to preclude the ends of the heat pipes from sagging while permitting unrestrained thermal expansion of the heat pipes.

In the heat exchanger 2 of the present invention, an auxiliary plenum chamber 40 is provided along the side of the second gas duct 8 through which the gaseous fluid to be heated passes. The auxiliary plenum chamber 40 is sealed from the outside environmentby its outer wall 42. The plenum chamber 40 lies adjacent the support plate 38 so as to receive the outer end portion of the condenser section of each of the heat pipes 10. Most advantageously, the support plate 38 forms the inner wall of the auxiliary plenum chamber 40. The holes in the support plate 38 through which the heat pipes pass into the auxiliary plenum chamber 40 are sized so as to permit sliding movement of the heat pipes under expansion forces, but minimize the leakage of cool gaseous fluid to be heated from gas duct 8 into the auxiliary plenum chamber 40.

As illustrated in Figure 2, each of the heat pipes 10 comprise an elongated tubular enclosure defining within its interior a closed working chamber 50 which contains a working fluid 70 which is not only

evaporatable within the temperature range provided by the heating gas, but also condensible within the temperature range provided by the gas to be heated. The portion of the heat pipe 10 which extends through the seal plate 12 into the heating gas duct 6 serves as the evaporator section 20 of the heat pipe 10, while the portion of the heat pipe 10 which extends through the seal plate 12 into the duct 8 for the gas to be heated serves as the condenser section 30 of the heat pipe 10. Each heat pipe 10 is installed at slight tilt within the heat exchanger 2 with its evaporator section, that is the section disposed in the heating gas stream, lower than its condenser section, that is the section disposed in the gas stream to be heated, so as to assist the return flow of the working fluid from the condenser section 30 to the evaporator section 20. Typically, the heat pipes are installed at an angle of a few degrees, generally about 5 to 15 degrees, with the horizontal typically by installing the seal plate 12 within the casing 4 at a similar angle to the vertical and mounting the heat pipes to extend through the seal plate 12 substantially perpendicularly thereto.

The heat pipes 10 may be formed of a single tubular member such as the upper two heat pipes illustrated in Figure 2, or the heat pipes 10 may be formed of two tubular members connected by means of an annular collar 60 such as the lower heat pipe illustrated in Figure 2. In applications where corrosive gases are minimal or the effect of any corrosive gases on the heat pipe tubular member is tolerable such as at operating temperatures above the dew point of the corrosive gases, the heat pipe is commonly formed of a single tubular member made of a less expensive, low corrosion resistant material, typically of a carbon steel alloy. In applications where corrosive gases are present in the heating gas at high concentrations or in applications where the corrosive effect of such gases is significant due to operation of the heat pipe at or below the due point of the corrosive gases, it is advantageous to form the heat pipe from two tubular members with the tubular member which is to be exposed to the corrosive gases, typically the evaporator section 20 of the heat pipe, being made of a corrosion resistant material, typically a stainless steel alloy, and the tubular member which is not being exposed to the corrosive gases, typically the condenser section 30 of the heat pipe, being made of a less expensive, low corrosion resistant material, typically a carbon steel alloy.

Because of its ease of handling and its safety, water is preferred over volatile organic compounds as the working fluid in many industrial applications. Freeze protection may be provided by adding an antifreeze agent to the water. Unfortunately, as previously noted, in steel-water heat pipes, that is heat pipes having an enclosure made of a ferrous metal or ferrous metal alloy and employing water as a working fluid, a reaction occurs within the working cavity between the water and the enclosure to generate undesirable, non-condensible hydrogen gas within the working cavity. As previously explained, the accumulation of hydrogen gas within the working cavity is highly detrimental to performance of the heat pipe.

Each heat pipe 10 of the present invention is provided with a hydrogen gas collection chamber 80 which is connected in flow communication with the condenser section 30 of the working cavity 50 of the heat pipe. The hydrogen gas collection chamber 80 extends from the outer end portion of the condenser section 30 of the heat pipe so as to provide an enclosure disposed within the interior of the auxiliary plenum chamber 40. Heating means operatively associated with the hydrogen gas collection chamber are provided for heating the hydrogen gas collection chamber to a temperature substantially above the temperature of the enclosure about the condenser portion 30 of the working cavity 50 of the heat pipe. Typically, the temperature of the outward portion of the condenser section 30 of the heat pipe disposed in the stream of gases to be heated at the cold end of the heat exchanger will be in the vicinity of 40 °C to 60 °C. The heating means should be capable of heating the hydrogen gas collection chamber 80 disposed within the auxiliary plenum chamber 40 to a temperature of at least 150 °C and, most advantageously, to a temperature in the range from about 160 °C to about 200 °C, for reasons to be set forth hereinafter.

In the embodiment depicted in the lowermost heat pipe 10a of Figure 2, the hydrogen gas collection chamber 80 comprises a closed tubular extension of the tubular member enclosing the condenser portion 30 of the working cavity 40 of the heat pipe 10a which extends into the auxiliary plenum chamber 40 and is connected in flow communication with the condenser portion 30 of the working cavity 40. This tubular extension 80 has at least a portion of its wall made of a material through which hydrogen gas diffuses at a temperature dependent rate, the rate of diffusion therethrough increasing as the temperature of the material increases. Most commonly, the hydrogen gas collection chamber 80 comprising a tubular extension of the heat pipe 10a is made of a ferrous material or a ferrous alloy material such as carbon steel which is known to be a material through which hydrogen gas diffuses at a temperature dependent rate. The relative diffusion rate of hydrogen gas through a carbon steel tube will increase by a factor of about 30 by merely increasing the temperature of the wall from about 60 °C to about 150 °C and will again triple by increasing the wall temperature further to about 200 °C. Alternatively, rather than merely depending upon the diffusive nature of carbon steel alone to provide for diffusion of the hydrogen gas collecting in the upper region of the working cavity 50 out of the heat pipe into the auxiliary plenum 40, an end plug 82 of a material known

to have a high and temperature dependent coefficient of diffusion for hydrogen gas may be inserted in the end of the tubular extension thereby forming the back wall of the hydrogen gas collection chamber 80. In either case, by heating the plenum chamber 40 in which the hydrogen gas collection chamber 80 is disposed or heating the hydrogen gas collection chamber 80 per se of the lower most heat pipe 10a depicted in Figure 2, the rate of diffusion of hydrogen gas through that portion of the chamber enclosure formed of a hydrogen gas diffusion material, the rate of diffusion therethrough may be substantially increased above that which would occur if the heat were not applied thereby effectively removing the hydrogen gas accumulating within the upper region of the condenser section of the working cavity 50 of the heat pipe 10 and precluding blockage of the condenser section of the heat pipe and consequent deterioration in thermal performance.

In the embodiment of the heat pipe of the present invention depicted as the center heat pipe 10b in Figure 2, the hydrogen gas collection chamber 80 comprises a closed tubular extension of the condenser section 30 of the working cavity 50 of the heat pipe 10b which is connected in flow communication with the condenser portion 30 of the working cavity 50 and houses a hydrogen gas conversion material 85 disposed therein. The hydrogen gas conversion material may be present in the form of a sintered plug-like block as shown in the heat pipe 10b of Figure 2 or the material 85 may be in the form of particulate beads, powder or threads and other forms. The particular form of the hydrogen gas conversion material is not particularly important. Rather, it is critical that the hydrogen gas conversion material be capable of chemically converting at least a portion of the hydrogen gas collecting in the hydrogen gas collection chamber 80 back into the working fluid from which the hydrogen gas was generated. Further, in practice the hydrogen gas conversion material 85 will typically have a rate of conversion of hydrogen gas which increases as its temperature increases and a minimum threshold reaction temperature which may be higher than the operating temperature of the heat pipes in the cold end of the heat exchanger.

In the case of water-ferrous metal heat pipes, that is heat pipes using water as the working fluid and having their tubular enclosures made of a ferrous metal or ferrous metal containing alloy, i.e., carbon steel or stainless steel, the hydrogen gas conversion material 85 must comprise a material capable of oxidizing hydrogen gas back into water, such as copper oxide, mixtures of copper and copper oxide, and, most advantageously, copper oxide or mixtures of copper and copper oxide with an oxidation catalyst, e.g., chromium oxide, added thereto to increase the rate of conversion at a given temperature thereby increasing conversion efficiency at lower material temperatures. By heating the auxiliary plenum chamber 40 into which the hydrogen gas conversion chamber 80 extends or by heating the hydrogen gas conversion chamber 80 per se, the temperature of the hydrogen gas conversion material 85 may be sufficiently increased to initiate reaction and/or increase the rate of conversion of hydrogen gas back into water so as to effectively eliminate the potential of hydrogen gas collection within the condenser section 30 of the working cavity 50 of the heat pipe 10b adversely impacting upon heat transfer performance within the condenser section of the heat pipe.

Most advantageously, the hydrogen gas collection chamber 80 associated with heat pipe 10b of Figure 2 comprises a mere tubular extension of the condenser section 30 of the heat pipe 10b and is therefore formed of a ferrous metal or ferrous metal alloy, such as carbon steel, the same as the enclosure surrounding the condenser section 30 of the heat pipe 10b. Therefore, upon heating of the plenum chamber or the hydrogen gas collection chamber 80 per se, a portion of the hydrogen gas collecting in the upper portion of the condenser section 30 of the heat pipe 10b would, rather than being converted back into water by the hydrogen conversion catalyst 85, diffuses through the wall of the heat pipe to leave the working cavity 50 of the heat pipe into the auxiliary plenum chamber 40. In such a heat pipe, the accumulation of hydrogen gas within the upper portion of the condenser section 30 of the working cavity 50 would be prevented by both the mechanism of hydrogen gas diffusion through the wall of the hydrogen gas collection chamber 80 and conversion of hydrogen gas back into the working fluid by the hydrogen conversion material 85 disposed within the hydrogen gas collection chamber 80.

In the embodiment of the heat pipe of the present invention depicted as the upper most heat pipe 10c of Figure 2, the hydrogen gas collection chamber 80 comprises a tubular enclosure which is welded to the end of the enclosure surrounding the condenser section 30 of the working cavity 50 of the heat pipe 10c so as to extend actually outwardly therefrom into the auxiliary plenum chamber 40. This tubular enclosure has a diameter which is smaller than that of the enclosure forming the heat pipe 10c. By providing a smaller diameter for the hydrogen gas collection chamber 80, the surface to volume ratio of the chamber is decreased thereby making it substantially easier to heat the hydrogen gas collection chamber 80 and the hydrogen conversion material 85 disposed therein. As the hydrogen gas collection chamber 80 need only contain sufficient hydrogen gas conversion material as is necessary to convert the quantity of hydrogen gas that is likely to be formed over the design life of the heat pipe, the diameter of the hydrogen gas collection

chamber 80 may typically be substantially smaller than that of the heat pipe enclosure.

Preferably, the interface between the hydrogen gas collection chamber 80 and the condenser section 30 of the working cavity 50, as shown in heat pipe 10c of Figure 2, comprises one or more small holes passing through the end wall of the enclosure of the condenser section 30 of the heat pipe and establishing flow communication between the working cavity 30 and the interior of the hydrogen gas collection chamber 80. By providing flow communication between the working cavity 30 of the heat pipe and the interior of the hydrogen gas collection chamber by one or more small holes as shown in the heat pipe 10c rather than as a large open area as in the case of heat pipes 10a and 10b, the possibility of working fluid being splashed or otherwise carried up from the evaporator section through the condenser section into the hydrogen gas conversion chamber is substantially reduced. It is undesirable to have working fluid enter the hydrogen gas conversion chamber 80 as its presence would cause a substantially larger amount of heat energy to be applied to the hydrogen gas conversion chamber in order to raise the temperature of its wall in any hydrogen gas conversion material 85 contained therein to the desired temperature levels.

As noted hereinbefore, the heating of the hydrogen gas conversion material 85 disposed within the hydrogen gas collection chamber 80 or the heating of the diffusion material forming at least a part of the hydrogen gas collection chamber enclosure may be accomplished either by heating the hydrogen gas collection chamber 80 per se or heating the interior auxiliary plenum chamber 40 into which the hydrogen gas collection chamber 80 extends from the condenser section 30 of the heat pipes. To heat the hydrogen gas collection chamber 80 per se, an electrical heating coil 90 may be wrapped about the hydrogen gas collection chamber 80 as depicted in the heat pipe 10c of Figure 2. The heating coil 90 may be selectively operatible to heat the hydrogen gas collection chamber 80 and the hydrogen gas conversion material 85 contained therein to the desired higher temperature whenever the presence of hydrogen gas within the condenser section 30 of the working cavity 50 of the heat pipe has been detected by a noticed deterioration in the performance of the heat pipe or the electric heating coil 90 may be operated at periodic intervals to remove any hydrogen gas collecting within the condenser section 30 before any substantial performance deterioration may occur. It is not contemplated that it would be generally necessary to continuously heat the hydrogen gas collection chamber 80.

One method of heating the interior of the auxiliary plenum chamber 40 is to dispose a heating coil 94 and a thermocouple 92 therein in operative association with the heating coil. The thermocouple 92 would be disposed within a portion of the auxiliary plenum chamber 40 somewhat distant from the electric coil heating means 94 but be connected therewith in operative association through a controller 96. The controller 96 would monitor the temperature sensed by the thermocouple 92 and periodically or upon command from the operator activate the electric heating coil means 94 to raise the temperature of the interior of the auxiliary plenum chamber 40 to the desired temperature for a desired period of time, such desired temperature being sufficient to raise the temperature of the hydrogen gas collection chamber 80 disposed therein to a temperature of at least 150°C and preferably from 160° to about 200°C. To minimize heat loss the auxiliary plenum chamber may be insulated both from the exterior environment and from the gas duct 8 through which the gas to be heated is passed.

As noted previously, the seal plate is designed to minimize leakage of the gas to be heated from the gas duct 8 into the auxiliary plenum chamber 40 and as a result cooling the interior of the auxiliary plenum chamber 40. As an alternate method of heating the interior of the auxiliary plenum chamber 40 a heated gas may be passed through the auxiliary plenum chamber 40 to flow over and around the hydrogen gas collection chamber 80 disposed therein. The heated gas may comprise heated air or a portion of the hot heating gas passing through the gas flow duct 6 of the heat exchanger. In either case, the pressure of the heated gas passed through the auxiliary plenum chamber 40 may be controlled to be higher than that of the gas to be heated passing through the gas duct 8 so as to ensure that any leakage that might occur between the auxiliary plenum chamber 40 and the gas duct 8 would be from the auxiliary plenum chamber 40 into the gas duct 8 and the possible leakage of the cooler gas to be heated into the auxiliary plenum chamber 40 would be precluded due to its lower pressure.

As hydrogen gas would typically be generated slowly within the working cavity 50 of the heat pipe and only gradually accumulate over time, it is contemplated that the hydrogen gas collection chamber 80 may need only to be heated at spaced intervals whenever the accumulation of hydrogen gas within the condenser section 30 of the working cavity 50 of the heat pipe begins to reduce performance of the heat pipe. The performance of the heat pipe may be monitored and the heating means operatively associated with the auxiliary plenum chamber 40 or the hydrogen gas collection chambers 80 per se being controlled automatically in response. For example, a pair of thermocouples 33 and 37 may be mounted to the exterior wall of the condenser section 30 of the heat pipe, such as shown on the upper most heat pipe 10c of Figure 2, at widely spaced intervals, with the first thermocouple 33 being disposed at a location near the upper end

of the enclosure surrounding the condenser section 30 of the working cavity 50 and the second thermocouple 37 being disposed at a lower location on the enclosure surrounding the condenser section 30 of the working cavity 50 of the heat pipe 10c. The thermocouples 33 and 37 would measure the local wall temperature and each would transmit a signal indicative the measured wall temperature back to a controller 45. The controller 45 would then calculate the temperature differential between the two thermocouples which would thereby indicate the temperature differential between the two locations on the enclosure of the condenser section 30 of the heat pipe. Whenever the sensed temperature differential exceeded a preselected level, the controller 45 would activate the heating coil 90 so as to heat the hydrogen gas collection chamber 80 or chambers about which the heating coil 90 was wound. Typically, a single heating coil 90 would be wound about a plurality of hydrogen gas collection chambers 80 associated with heat pipes mounted in the same row or neighboring rows and the thermocouples 35 and 37 associated with the control means 45 would only be mounted to one of the heat pipes of the group of heat pipes associated with the heating coil 90 controlled by that controller 45.

Although the heat pipe of the present invention is described with reference to the particular embodiments thereof shown in the drawing, it should be understood that various changes and modifications to be therein without departing from the spirit and scope of the invention.

**Claims**

1. In a heat pipe having an enclosure defining a working cavity housing a working fluid and having an evaporator portion for evaporating the working fluid and a condenser portion in flow communication with the evaporator portion for condensing the evaporated working fluid, and using as the working fluid disposed within the working cavity a vaporizable liquid which releases hydrogen gas upon reaction with the enclosure, the improvement comprising:
   a. a hydrogen gas collection chamber communicating with the condenser portion of the working cavity of said heat pipe to collect hydrogen gas generated within the working cavity; and
   b. heating means operatively associated with said hydrogen gas collection chamber for heating said hydrogen gas collection chamber to a temperature substantially above the temperature of the enclosure about the condenser portion of the working cavity of the heat pipe.

2. An improved heat pipe as recited in Claim 1 wherein said hydrogen gas collector chamber comprises an enclosure extending from the tubular member enclosing the condenser portion of the working cavity of said at least one heat pipe into said auxiliary plenum chamber and connected in flow communication with the condenser portion of the working cavity, said enclosure having a wall at least a portion of which is made of a material through which hydrogen gas diffuses at a temperature dependent rate, the rate of diffusion therethrough increasing as the temperature of said material increases.

3. An improved heat pipe as recited in Claim 2 wherein said heating means is capable of heating said hydrogen gas collection chamber to a temperature of at least 150 °C.

4. An improved heat pipe as recited in Claim 3 wherein said heating means comprises electrical heating coil means disposed about said hydrogen gas collection chamber and selectively operatible to heat said hydrogen gas collection chamber to a temperature ranging from about 160 °C to about 200 °C.

5. An improved heat pipe as recited in Claim 2 further comprising a hydrogen gas conversion material disposed within said hydrogen gas collection chamber, said hydrogen gas conversion material being capable of chemically converting at least a portion of the hydrogen gas collecting in said hydrogen gas collection chamber back into the working fluid from which the hydrogen gas was generated.

6. An improved heat pipe as recited in Claim 5 wherein the heat pipe enclosure is made of a ferrous metal or ferrous metal containing alloy.

7. An improved heat pipe as recited in Claim 6 wherein the working fluid comprises water.

8. An improved heat pipe as recited in Claim 7 wherein said hydrogen gas conversion material comprises a material capable of oxidizing hydrogen gas into water.

9. An improved heat pipe as recited in Claim 8 wherein the hydrogen gas oxidizing material comprises

copper oxide or a mixture of copper and copper oxide.

**10.** An improved heat pipe as recited in Claim 8 wherein the hydrogen gas oxidizing material comprises a mixture of copper oxide and an oxidation catalyst or a mixture of copper, copper oxide and an oxidation catalyst.

**11.** An inproved heat pipe as recited in Claim 10 whwerein the oxidation catalyst comprises chromium oxide.

**12.** In a heat pipe having an enclosure defining a working cavity housing a working fluid and having an evaporator portion for evaporating the working fluid and a condenser portion in flow communication with the evaporator portion for condensing the evaporated working fluid, and using as the working fluid disposed within the working cavity a vaporizable liquid which releases hydrogen gas upon reaction with the enclosure, the improvement comprising:

a. a hydrogen gas collection chamber communicating with the condenser portion of the working cavity of said heat pipe to collect hydrogen gas generated within the working cavity;

b. a hydrogen gas conversion material disposed within said hydrogen gas collection chamber, said hydrogen gas conversion material being capable of chemically converting at least a portion of the hydrogen gas collecting in said hydrogen gas collection chamber back into the working fluid from which the hydrogen gas was generated, said hydrogen gas conversion material having a rate of conversion of hydrogen gas which increases as its temperature increases; and

c. heating means operatively associated with said hydrogen gas collection chamber for heating said hydrogen gas collection temperature to a temperature substantially above the temperature of the enclosure about the condenser portion of the working cavity of the heat pipe.

**13.** An improved heat pipe as recited in Claim 12 wherein said heating means is capable of heating said hydrogen gas collection chamber to a temperature of at least about 150 °C.

**14.** An improved heat pipe as recited in Claim 13 wherein the heat pipe enclosure is made of a ferrous metal or ferrous metal containing alloy.

**15.** An improved heat pipe as recited in Claim 14 wherein the working fluid comprises water.

**16.** An improved heat pipe as recited in Claim 15 wherein said hydrogen gas conversion material comprises a material capable of oxidizing hydrogen gas into water.

**17.** An improved heat pipe as recited in Claim 16 wherein the hydrogen gas oxidizing material comprises copper oxide or a mixtures of copper and copper oxide.

**18.** An improved heat pipe as recited in Claim 17 wherein said heating means comprises electrical heating coil means disposed about said hydrogen gas collection chamber and selectively operatible to heat said hydrogen gas collection chamber to a temperature ranging from 160 °C to about 200 °C.

**19.** An improved heat pipe as recited in Claim 16 wherein the hydrogen gas oxidizing material comprises a mixture of copper oxide and an oxidation catalyst or a mixture of copper, copper oxide and an oxidation catalsyt.

**20.** An improved heat pipe as recited in Claim 19 whwerein the oxidation catalyst comprises chromium oxide.

**21.** An improved heat pipe as recited in Claim 20 wherein said heating means comprises electrical heating coil means disposed about said hydrogen gas collection chamber and selectively operatible to heat said hydrogen gas collection chamber to a temperature ranging from 160 °C to about 200 °C.

**22.** A heat pipe heat exchanger comprising:

a. a casing defining within its interior a gas flow path therethrough and having a seal plate disposed within its interior so as to divide the gas flow path therethrough into a first gas duct on one side of the seal plate defining a first flow passageway for a first gas stream of heated gas and a second gas

duct on the other side of the seal plate defining a second flow passageway for a second gas stream of gas to be heated, said casing having a first inlet opening to one end of the first gas duct for receiving the first gas stream, a first outlet opening to the other end of the first gas duct for discharging the first gas stream, a second inlet opening to one end of the second gas duct for receiving the second gas stream, and a second outlet opening to the other end of the second gas duct for discharging the second gas stream;

b. at least one heat pipe mounted to the seal plate so as to extend therethrough, said heat pipe comprising an enclosed elongated tubular member defining a working cavity housing a working fluid and having an evaporator portion for evaporating the working fluid and a condenser portion in flow communication with the evaporator portion for condensing the evaporated working fluid and using as the working fluid disposed within the working cavity a vaporizable liquid which releases hydrogen gas upon reaction with the tubular member, the evaporator portion of the tubular member being disposed in the first gas duct and the condenser portion of the tubular member being disposed in the second gas duct;

c. an auxiliary plenum chamber disposed laterally adjacent the second gas duct of the heat exchanger casing;

d. hydrogen gas collection chamber means operatively associated in flow communication with the condenser portion of said at least one heat pipe for receiving hydrogen gas generated within the working cavity of said at least one heat pipe, said hydrogen gas collection chamber means disposed within the auxiliary plenum chamber; and

e. heating means for heating said hydrogen gas collection chamber means to a temperature substantially above the temperature of the section of the tubular member enclosing the condenser portion of the working cavity of said at least one heat pipe.

**23.** A heat pipe heat exchanger as recited in Claim 22 wherein said hydrogen gas collection chamber means comprises an enclosure extending from the tubular member enclosing the condenser portion of the working cavity of said at least one heat pipe into said auxiliary plenum chamber and connected in flow communication with the condenser portion of the working cavity, said enclosure having a wall at least a portion of which is made of a material through which hydrogen gas diffuses at a temperature dependent rate, the rate of diffusion therethrough increasing as the temperature of said material increases.

**24.** A heat pipe heat exchanger as recited in Claim 23 wherein said heating means comprises electrical heating coil means disposed about said hydrogen gas collection chamber enclosure and selectively operatible to heat said hydrogen gas collection chamber enclosure to a temperature of at least 150 °C.

**25.** A heat pipe heat exchanger as recited in Claim 24 wherein said electric heating coil means is selectively operatible to heat said hydrogen gas collection chamber enclosure to a temperature ranging from about 160 °C to about 200 °C.

**26.** A heat pipe heat exchanger as recited in Claim 22 wherein said heating means comprises electrical heating means operatively associated with said auxiliary plenum chamber selectively operatible for heating the interior thereof and said hydrogen gas collection chamber means disposed therein to a temperature of at least 150 °C.

**27.** A heat pipe heat exchanger as recited in Claim 22 wherein said heating means comprises means for passing a heated gas through said auxiliary plenum chamber so as to heat said hydrogen gas collection chamber means to a temperature of at least 150 °C.

**28.** A heat pipe heat exchanger as recited in Claim 22 further comprising a hydrogen gas conversion material disposed within said hydrogen gas collection chamber means, said hydrogen gas conversion material being capable of chemically converting at least a portion of the hydrogen gas collecting in said hydrogen gas collection chamber means back into the working fluid from which the hydrogen gas was generated.

**29.** A heat pipe heat exchanger as recited in Claim 28 wherein the tubular member forming said at least one heat pipe is comprised of a ferrous metal or ferrous metal containing alloy.

**30.** A heat pipe heat exchanger as recited in Claim 29 wherein the working fluid in said at least one heat pipe comprises water.

**31.** A heat pipe heat exchanger as recited in Claim 30 wherein said hydrogen gas conversion material comprises a material capable of oxidizing hydrogen gas into water.

**32.** A heat pipe heat exchanger as recited in Claim 31 wherein the hydrogen gas oxidizing material comprises copper oxide or a mixture of copper and copper oxide.

**33.** A heat pipe heat exchanger as recited in Claim 32 wherein said heating means comprises electrical heating coil means disposed about said hydrogen gas collection chamber means and selectively operatible to heat said hydrogen gas collection chamber means to a temperature of at least 150 °C.

**34.** A heat pipe heat exchanger as recited in Claim 33 wherein said electric heating coil means is selectively operatible to heat said hydrogen gas collection chamber means to a temperature ranging from about 160 °C to about 200 °C.

**35.** A heat pipe heat exchanger as recited in Claim 31 wherein the hydrogen gas oxidizing material comprises a mixture of copper oxide and an oxidation catalyst or a mixture of copper, copper oxide and an oxidation catalyst.

**36.** A heat pipe heat exchanger as recited in Claim 35 wherein the oxidation catalyst comprises chromium oxide.

**37.** A heat pipe heat exchanger as recited in Claim 36 wherein said heating means comprises electrical heating coil means disposed about said hydrogen gas collection chamber means and selectively operatible to heat said hydrogen gas collection chamber means to a temperature of at least 150 °C.

**38.** A heat pipe heat exchanger as recited in Claim 37 wherein said electric heating coil means is selectively operatible to heat said hydrogen gas collection chamber means to a temperature ranging from about 160 °C to about 200 °C.

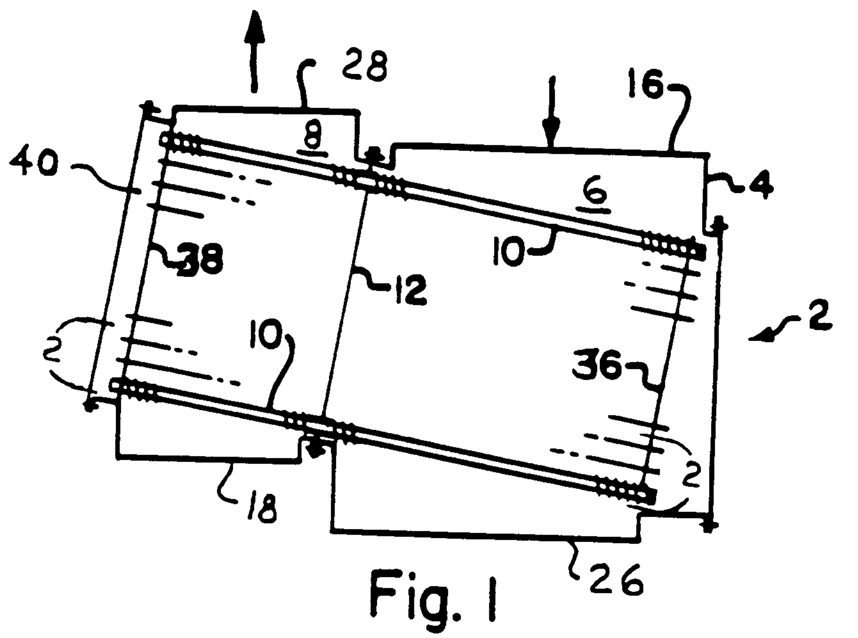


Fig. 1

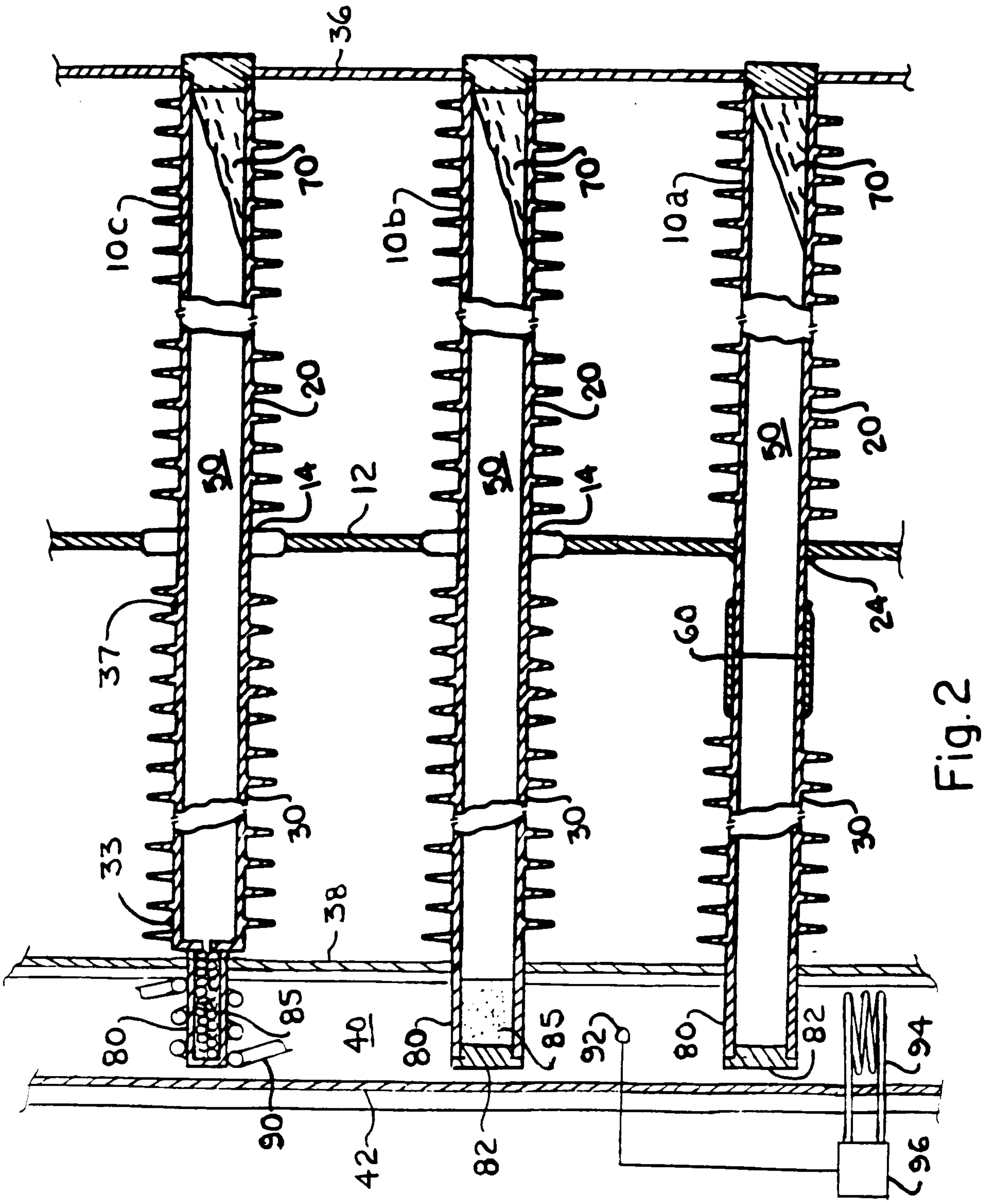
36
10c
10b
10a
70
20
50
14
12
24
60
37
33
30
38
80
85
40
92
94
90
42
82
96

Fig.2

European Patent Office

# EUROPEAN SEARCH REPORT

Application Number

**EP 91 10 8399**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | SOVIET PATENTS ABSTRACTS Section PQ, Week 8618, 16 May 1986 Derwent Publications Ltd., London, GB; Class Q7 & SU-A-1 183 819 (TKACHEV) 7 October 1985 | 1 | F 28 D 15/02<br>C 01 B 5/00 |
| A | | 2,12,22 | |
| Y | SOVIET PATENTS ABSTRACTS Section PQ, Week 25, 3 August 1983 Derwent Publications Ltd., London, GB; Class Q7 & SU-A-947 614 (AS MOLD APP PHYS) 30 July 1982 | 1 | |
| A | | 2,12,22 | |
| A | US-A-4 901 790 (MEIJER) * column 3, line 21 - column 3, line 39 * * * column 3, line 65 - column 4, line 13 * * * column 4, line 58 - column 4, line 63; figures 1,5 * * | 1 | |
| A | US-A-3 503 438 (GEYER) * column 2, line 26 - column 3, line 13; figure 4 * * | 1 | |
| A | PATENT ABSTRACTS OF JAPAN vol. 11, no. 1 (M-550)(2448) 6 January 1987 & JP-A-61 180 887 ( SUMITOMO ELECTRIC IND LTD ) 13 August 1986 * abstract * * | 1 | **TECHNICAL FIELDS SEARCHED (Int. Cl.5)**<br>F 28 D<br>C 01 B |
| A | PATENT ABSTRACTS OF JAPAN vol. 12, no. 378 (M-751)(3225) 11 October 1988 & JP-A-63 129 297 ( SHOWA ALUM CORP ) * abstract * * | 1,12 | |
| A | US-A-4 219 070 (KUROKAWA ET AL) * column 2, line 53 - column 4, line 28; figure 1 * * | 22 | |

The present search report has been drawn up for all claims

| Place of search | Date of completion of search | Examiner |
|---|---|---|
| The Hague | 29 October 91 | BELTZUNG F.C. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document